## Europäisches Patentamt

## European Patent Office

## Office européen des brevets

(19)

(11) Veröffentlichungsnummer: **0 154 700**
**B1**

(12) **EUROPÄISCHE PATENTSCHRIFT**

(45) Veröffentlichungstag der Patentschrift:
**09.03.88**

(51) Int. Cl.⁴: **G 01 J  3/28,** G 02 B  27/58,
**H 01 S  3/00**

(21) Anmeldenummer: **84115146.7**

(22) Anmeldetag: **11.12.84**

(54) **Braggzellen-Spektralanalysator mit einem Prismenaufweitungssystem.**

(30) Priorität: **10.02.84  DE 3404822**

(43) Veröffentlichungstag der Anmeldung:
**18.09.85 Patentblatt 85/38**

(45) Bekanntmachung des Hinweises auf die Patenterteilung:
**09.03.88 Patentblatt 88/10**

(84) Benannte Vertragsstaaten:
**DE FR GB NL**

(56) Entgegenhaltungen:
**EP - A - 0 019 778**

**E. MENZEL et al. ″Fourier-Optik und Holographie″ 1973, SPRINGER VERLAG, Wien, New York, Seiten 68,69 OPTICAL ENGINEERING, Band 16., Nr. 5, September/Oktober 1977; D.L. HECHT ″Spectrum Analysis Using Acousto-Optic Devices″, Seiten 461-466 APPLIED OPTICS, Band 21, Nr. 1, Januar 1982, New York, USA; W. VELDKAMP et al. ″Compact, collinear, and variable anamorphic-beam compressor design″, Seiten 7-9**

(73) Patentinhaber: **Siemens Aktiengesellschaft Berlin und München, Wittelsbacherplatz 2, D-8000 München 2 (DE)**

(72) Erfinder: **Storck, Eckhard, Dr., Argelsrieder Strasse 27, D-8000 München 71 (DE)**
Erfinder: **Wolff, Ulrich, Dipl.-Phys., Geigenbergerstrasse 35, D-8000 München 71 (DE)**

ACTORUM AG

**Beschreibung**

Die vorliegende Erfindung betrifft einen Braggzellen-Spektralanalysator mit einem Prismenaufweitungssystem nach dem Oberbegriff des Patentanspruchs 1.

Ein Analysator der genannten Art ist aus Optical Engineering, Vol. 16, Nr. 5, Sept./Okt. 1977, Seiten 461 bis 466 bekannt. Bei diesem Analysator wird der Laserstrahl durch das Aufweitungssystem so stark aufgeweitet, dass die Halbwertsbreite der dort als ideal angenommenen Gauss'schen Querschnittsverteilung der Intensität etwa so gross ist wie die Apertur der Braggzelle. Durch diese spezielle Gauss-Apodisation wird die Frequenzauflösung der Braggzelle voll genutzt, andererseits entsteht ein Spektrum mit noch relativ hohen Beugungsfransen (side lobes). Die Höhe dieser Beugungsfransen relativ zur Höhe des Hauptmaximums des Spektrums bestimmt den Dynamikbereich des Analysators. Je niedriger diese Beugungsfransen im Vergleich zum Hauptmaximum sind, desto grösser der Dynamikbereich.

Aufgabe der Erfindung ist es, aufzuzeigen, wie bei einem Braggzellen-Spektralanalysator der genannten Art eine höhere Dynamik, insbesondere von mehr als 30 dB, bei gleichzeitig stabilem Aufbau des Analysators erreicht werden kann.

Diese Aufgabe wird durch die im kennzeichnenden Teil des Patentanspruchs 1 angegebenen Merkmale gelöst.

Zu dieser Lösung haben folgende Erkenntnisse geführt: Man kann eine Apodisierung der Beugungsfransen einfach dadurch erreichen, dass der Laserstrahl nicht so stark aufgeweitet wird, d.h. dass seine Halbwertsbreite klein bleibt gegen die Apertur der Braggzelle. Dann ist die Intensität an den Rändern der Braggzellen-Apertur erheblich niedriger und dadurch die Beugung an diesen Rändern entscheidend reduziert. Wie klein die Intensität an den Rändern der Braggzellen-Apertur sein muss, damit im Spektrum die Höhe der Beugungsfransen unter einem vorgegebenen Pegel, beispielsweise unter 50 dB, bleiben, und wie gross dann die Breite des Hauptmaximums im Vergleich zu einem theoretischen Optimum ist, lässt sich aus P. Jaquinot, B. Roizen-Dossier: Apodisation, Progress in Optics III, E. Wolf, ed., North-Holland Publ. Comb., Amsterdam 1964, S. 55 entnehmen. Beispielsweise muss für die genannten 50 dB, d.h. für einen Dynamikbereich von 50 dB, die Amplitude der Gauss-Verteilung bei dem Wert $\exp(-4)$ abgeschnitten werden und dementsprechend die Intensität bei dem Wert $\exp(-8) = 3 \times 10^{-4}$.

Im Realfall ist die Gauss'sche Querschnittsverteilung der Intensität des Laserstrahls von Streulicht überlagert. Dieses Streulicht wirkt für die Apodisation störend und muss daher beseitigt oder gemindert werden.

Danach besteht die praktische Aufgabe bei der Apodisation zur Erzielung eines höheren Dynamikbereichs, insbesondere des 50 dB-Dynamikbereichs, in einer Entfernung des Streu- bzw. Störlichtes, ohne dass dabei die Gauss'sche Querschnittsverteilung, beispielsweise durch Beugung zerstört wird.

Für die Beseitigung des Streulichts sind zwei optische Systeme gebräuchlich: Das Mikroskopobjektiv mit Modenblende und die Monomode-Lichtleitfaser.

Beim erstgenannten System wird der Laserstrahl durch das Mikroskopobjektiv fokussiert und im Fokus die Modenblende mit extrem kleinem Öffnungsdurchmesser, beispielsweise im 10µm Bereich, so angeordnet, dass sie nur den Grundmodus des Laserstrahls durchlässt, während das Streulicht seitlich neben die Öffnung der Blende fokussiert und blockiert wird. Entscheidend ist die genaue Abstimmung von Mikroskopobjektiv und Modenblende auf den vorhandenen Laserstrahldurchmesser. Ist die Modenblende zu gross, so wird zu viel Streulicht durchgelassen; ist sie zu klein, so wird die Gauss'sche Querschnittsverteilung der Intensität des Laserstrahls durch Beugung zerstört. Dieses System lässt sich nur mit ausgesuchten hochwertigen Mikroskopobjektiven und mit hohem Justieraufwand bei der Fertigung und Einstellung der Modenblende realisieren. Ausserdem ist auch noch eine sorgfältig auszuwählende hochwertige Kollimatorlinse zur Erzeugung eines von Störlicht gesäuberten gebündelten Laserstrahls mit der gewünschten Gaussschen Querschnittsverteilung aus dem aus der Modenblende austretenden divergenten Strahlenbündel erforderlich.

Im Vergleich zu diesem erstgenannten System ist das zweitgenannte System mit der Monomodefaser etwas weniger aufwendig und justierempfindlich. Bei diesem System wird das Laserlicht in die Monomode-Glasfaser fokussiert, in deren Kern nur der gaussförmige Anteil geführt wird, während das Streulicht in den Mantel austritt und schliesslich durch einen Mantelmoden-Abstreifer entfernt wird. Das aus dem anderen Ende der Monomode-Faser austretende Licht, das in rein Gauss'schem Modus austritt, wird bei dem erstgenannten System mit der Modenblende mittels einer hochwertigen Linse kollimiert.

Beide Systeme lösen die praktische Aufgabe bei der Apodisierung und stellen zudem das benötigte Aufweitungssystem für den Laserstrahl dar. Sie sind jedoch offensichtlich für einen stabilen Aufbau eines Braggzellen-Spektralanalysators wenig geeignet. Für einen derartigen stabilen Aufbau, insbesondere einen Kompaktaufbau eines solchen Analysators hat sich zur Aufweitung des Laserstrahls aus Stabilitätsgründen ein Prismenausweitungssystem als besonders geeignet erwiesen. Bei einem solchen System kann aber der Laserstrahl nicht von Streulicht gesäubert werden, d.h., er lässt von vornherein keine Erhöhung der Dynamik des Analysators, insbesondere keine Erhöhung der Dynamik auf 50 dB, zu.

Durch die vorliegende Erfindung ist ein Weg aufgezeigt, wie auch bei einem hinsichtlich der Stabilität günstigen Prismenaufweitungssystem die praktische Aufgabe bei der Apodisierung gelöst werden kann, d.h. wie eine weitgehend von Störlicht befreite Gauss'sche Querschnittsvertei-

lung der Intensität des Laserstrahls erreicht werden kann. Dies wird durch die im kennzeichnenden Teil des Patentanspruchs 1 angegebene Aperturblende gelöst.

Die erfindungsgemässe Lösung umfasst damit auch generell ein neuartiges Aufweitungssystem, das die genannte praktische Aufgabe der Gauss-Apodisierung löst.

Der Durchmesser der Aperturblende ist grösser als die Halbwertsbreite der Gauss'schen Querschnittsverteilung der Intensität des Laserstrahls, d.h. ein zigfaches grösser als der Durchmesser der Öffnung einer Modenblende, und zu ihrer Herstellung ist erheblich weniger Genauigkeit erforderlich als bei einer solchen Modenblende. Der Durchmesser der Öffnung der Aperturblende liegt im Millimeterbereich.

Eine vorteilhafte Ausgestaltung des erfindungsgemässen Analysators geht aus dem Anspruch 2 hervor. Bei dieser Ausgestaltung entspricht der Intensitätswert am Rand der Öffnung der Aperturblende dem Intensitätswert am Rand der Apertur der Braggzelle.

Bei einer bevorzugten Ausgestaltung des erfindungsgemässen Analysators ist die Aperturblende in dem Laserstrahl direkt vor dem Prismenaufweitungssystem angeordnet (Anspruch 3).

Besonders vorteilhaft ist es, dass mit einem erfindungsgemässen Analyator, insbesondere mit dem Analysator nach Anspruch 2, ein Dynamikbereich von 50 dB erreicht werden kann, wenn gemäss Anspruch 4 der Durchmesser der Aperturblende so gewählt ist, dass die Intensität des Laserstrahls am Rande der Braggzellen-Apertur gerade den $3 \times 10^{-4}$ten Teil vom Intensitätswert in der Strahlmitte beträgt.

Die untere Dynamikgrenze der Braggzelle, die durch die streulichtäquivalente Signalleistung NEP gegeben ist, kann herabgesetzt werden, wenn ein erfindungsgemässer Analysator so ausgebildet wird, wie er im Anspruch 4 oder 5 angegeben ist. Eine derartige Kombination der Ausleuchtung mit dem erfindungsgemässen Prismenaufweitungssystem mit Aperturblende ermöglicht einen besonders einfachen stabilen und kompakten Aufbau des Analysators.

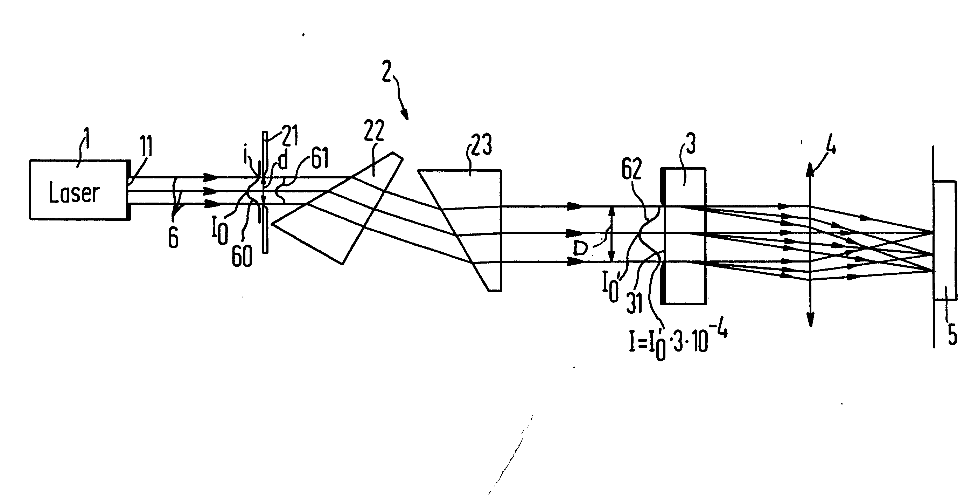

Die Erfindung wird beispielhaft anhand der Figur näher erläutert.

Die Figur zeigt in schematischer Darstellung einen beispielhaften Aufbau des Braggzellen-Spektralanalysators, wobei die Strahldurchmesser etwas übertrieben gross dargestellt sind.

Der in der Figur dargestelle Braggzellenanalysator besteht aus dem Laser 1, dem Prismenaufweitungssystem 2 mit Apodisierungsblende, der Braggzelle 3, einer Transformationslinse 4 zur Fourier-Transformation und einer Detektoranordnung 5.

Der Laser 1 sendet den Laserstrahl 6 aus, der aus dem Laser 1 durch eine Öffnung 11 mit einem Durchmesser in der Grössenordnung eines Millimeters, beispielsweise 2 mm, austritt, und der eine mit Streulicht überlagerte Gauss'sche Querschnittsverteilung 60 der Intensität aufweist, deren Maximum in der Mitte des Strahls mit $I_0$ bezeichnet ist.

Das Prismenaufweitungssystem 2 besteht aus der in dem Laserstrahl 6 angeordneten Aperturblende 21 als Apodisationsblende und aus zwei in Strahlrichtung nachgeordneten Aufweitungsprismen 22 und 23.

Der Öffnungsdurchmesser d der Aperturblende 21 ist grösser als die Halbwertsbreite der Gauss'schen Querschnittsverteilung des Laserstrahls 6 gewählt und so bemessen, dass die Kurve 60 der Gauss'schen Querschnittsverteilung am Rand bei einem bestimmten sehr geringen Intensitätswert i im Vergleich zum Intensitätswert $I_0$ in der Strahlmitte abgeschnitten wird.

Wichtig ist, dass der Durchmesser der Öffnung 11, durch die der Laserstrahl 6 aus dem Laser 1 austritt, in der Grössenordnung eines Millimeters liegt, und dass der aus dieser Öffnung austretende Laserstrahl 6 bis zur Aperturblende 21 eine Strekke in der Grössenordnung eines Meters mit konstantem Querschnitt durchläuft. Denn nur dann bilden die Öffnung am Laser 1 und die Aperturblende 21 ein System von beispielsweise 2 mm grossen Blenden in metergrossem Abstand, das nur den Grundmodus des Laserstrahls beugungsbegrenzt durchlässt und das Streulicht des Laserstrahls blockiert. Die theoretischen Grundlagen dazu sind aus J. Ost und E. Storck: Techniques for generation and adjustment of reference and reconstructing waves in precision holography, Optics Technology, Nov. 1969, S. 251–254, insbesondere in den dortigen Ausführungen zu General Remarks und Diaphragm Method angegeben.

Prinzipiell könnte der Durchmesser der Öffnung am Laser 1 und der Öffnungsdurchmesser der Aperturblende 21 auch in der Grössenordnung eines Zentimeters liegen, jedoch würde dann der zur Ausblendung des Streulichts erforderliche Abstand in der Grössenordnung vom 10 m oder gar 100 m liegen, was für Laborzwecke und für einen kompakten Aufbau des Braggzellen-Spektralanalysators praktisch nicht in Frage kommt.

Der aus der Aperturblende 21 austretende beugungsbegrenzte Laserstrahl weist die mit 61 bezeichnete abgeschnittene Gauss'sche Querschnittsverteilung auf und wird durch die beiden Prismen 22 und 23 aufgeweitet. Der aufgeweitete Laserstrahl leuchtet die Apertur 31 der Braggzelle 3 aus.

Der Durchmesser D des aufgeweiteten Laserstrahls entspricht dem Durchmesser der Apertur der Braggzelle 3. Der aufgeweitete Laserstrahl weist die Gauss'sche Querschnittsverteilung 62 der Lichtintensität auf, d.h. die Kurve 62 entspricht der Kurve 61 bis auf die Streckung auf den Durchmesser D. Der Öffnungsdurchmesser d der Aperturblende 21 und/oder die Aufweitung des Laserstrahls sind so bemessen, dass die Intensität I des aufgeweiteten Laserstrahls an den Rändern der Apertur der Braggzelle den $3 \times 10^{-4}$-ten Teil vom Intensitätswert $I'_0$ in der Mitte dieses Strahls beträgt. Dieser Intensitätswert entspricht im vorliegenden Fall dem Intensitätswert i am Rande der Aperturblende 21.

Das aus der Braggzelle 3 austretende Licht wird durch die Transformationslinse 4 zur Auswertung auf ein Detektorfeld eines Detektors 5 fokussiert.

Der Intensitätswert am Rande der Apertur 31 der Braggzelle 3 und damit der abgeschnittenen Gauss'schen Querschnittsverteilung 62 ist so gewählt, dass die Beugungsfransen durch Gauss-Apodisation und Säuberung des Laserstrahls von Streulicht unter einen Pegel gedrückt werden, der einen Umgebungsdynamikbereich des Braggzellen-Spektralanalysators von 50 dB erlaubt.

Der aus dem Prisma 23 austretende und der Braggzelle 3 zugeleitete aufgeweitete Laserstrahl mit dem Durchmesser D wird üblicherweise fokussiert, und zwar derart, dass der Fokus in der Mitte der Braggzelle 3 liegt. Wie schon erwähnt, ist es vorteilhaft, den Fokus nicht in die Mitte der Braggzelle zu legen, sondern ausserhalb, beispielsweise zwischen das Prisma 23 und die Braggzelle 3. Besonders vorteilhaft ist es jedoch, auf eine Fokussierung ganz zu verzichten und die Braggzelle mit dem aus dem Prisma 23 austretenden aufgeweiteten Laserstrahl direkt zu beleuchten.

**Patentansprüche**

1. Braggzellen-Spektralanalysator mit einem Aufweitungssystem zur Aufweitung des der Braggzelle zugeleiteten Laserstrahls, der aus einer Öffnung mit einem in der Grössenordnung eines Millimeters liegenden Durchmesser als ein Parallelstrahlenbündel mit Gauss'scher Querschnittsverteilung der Lichtintensität austritt und in dieser Form dem Aufweitungssystem zugeführt ist, wobei das austretende Parallelstrahlenbündel von Streulicht überlagert ist, dadurch gekennzeichnet, dass das Aufweitungssystem ein Prismenaufweitungssystem (2) ist, dass vor dem Prismenaufweitungssystem (2) eine Aperturblende (21) im Laserstrahl (6) angeordnet ist, die in einem in der Grössenordnung eines Meters liegenden Abstand vor der Öffnung (11) angeordnet ist, aus welcher der Laserstrahl (6) austritt, und die einen Durchmesser (d) in der Grössenordnung eines Millimeters aufweist, der grösser ist als die Halbwertsbreite der Gauss'schen Querschnittsverteilung (60) und der die Gauss'sche Querschnittsverteilung (60) an den Rändern abschneidet, und dass das Prismenaufweitungssystem (2) den aus der Aperturblende (21) austretenden beugungsbegrenzten Laserstrahl mit der an den Rändern abgeschnittenen Gauss'schen Querschnittsverteilung (61) so weit aufweitet, dass an den Rändern der Apertur (31) der Braggzelle (3) ein vorgebbarer Intensitätswert (I) der aufgeweiteten abgeschnittenen Gaussschen Querschnittsverteilung (62) herrscht, der kleiner ist, als die Hälfte des maximalen Intensitätswerts (I'$_0$) in der Mitte dieser Querschnittsverteilung (62).

2. Analysator nach Anspruch 1, dadurch gekennzeichnet, dass der Intensitätswert (I) der aufgeweiteten abgeschnittenen Gauss'schen Querschnittsverteilung (62) an den Rändern der Apertur (31) der Braggzelle (3) etwa gleich dem 3 × 10$^{-4}$-ten Teil des maximalen Intensitätswertes (I'$_0$) in der Mitte dieser Querschnittsverteilung (62) ist.

3. Analysator nach Anspruch 1 oder 2, dadurch gekennzeichnet, dass der Durchmesser (d) der Aperturblende (21) so gewählt ist, dass er durch das Prismenaufweitungssystem (2) auf den Durchmesser (D) der Apertur (31) der Braggzelle (3) aufgeweitet wird.

4. Analysator nach einem der vorhergehenden Ansprüche, dadurch gekennzeichnet, dass der aus dem Prismenaufweitungssystem (2) austretende aufgeweitete Laserstrahl der Braggzelle (3) über eine Fokussierungsoptik zur Ausleuchtung der Apertur (31) der Braggzelle (3) zugeleitet ist, die den Laserstrahl so fokussiert, dass der Fokus in Form einer fokalen Linie ausserhalb der Braggzelle (3) liegt.

5. Analysator nach einem der Ansprüche 1 bis 3, dadurch gekennzeichnet, dass der aus dem Prismenaufweitungssystem (2) austretende aufgeweitete Laserstrahl der Braggzelle (3) unfokussiert zur Ausleuchtung der Apertur (31) der Braggzelle (3) zugeleitet ist.

**Claims**

1. A Bragg cell spectral analyser comprising an expansion system for expanding the laser beam which is supplied to the Bragg cell and which emerges from an opening having a diameter in the order of 1 mm in the form of a parallel bunch of rays with a Gaussian cross-sectional distribution of the light intensity and is supplied in this form to the expansion system, where stray light is superimposed upon the emerging bunch of parallel rays, characterised in that the expansion system is a prism expansion system (2), that prior to the prism expansion system (2) an aperture diaphragm (21) is arranged in the path of the laser beam (6) and is located at an interval in the order of 1 metre in front of the opening (11) from which the laser beam (6) emerges and which has a diameter (d) in the order of 1 mm which is larger than the half-width value of the Gaussian cross-sectional distribution (60) and which cuts off the Gaussian cross-sectional distribution (60) at the edges, and that the prism expansion system (2) expands the diffraction-limited laser beam emerging from the aperture diaphragm (21) with the Gaussian cross-sectional distribution (61) cut-off at the edges to such an extent that at the edges of the aperture (31) of the Bragg cell (3) a predeterminable intensity value (I) of the expanded, cut-off Gaussian cross-sectional distribution (62) prevails, which is smaller than half the maximum intensity value (I'$_0$) in the centre of this cross-sectional distribution (62).

2. An analyser as claimed in claim 1, characterised in that the intensity value (I) of the expanded, cut-off Gaussian cross-sectional distribution (62) at the edges of the aperture (31) of the Bragg cell (3) is approximately equal to 3 × 10$^{-4}$-th part of the maximum intensity value (I'$_0$) in the centre of this cross-sectional distribution (62).

3. An analyser as claimed in claim 1 or claim 2, characterised in that the diameter (d) of the aperture diaphragm (21) is selected to be such that it is expanded by the prism expansion system (2) to the diameter (D) of the aperture (31) of the Bragg cell (3).

4. An analyser as claimed in one of the preceding claims, characterised in that the expanded laser beam which emerges from the prism expansion system (2) is supplied to the Bragg cell (3) in order to illuminate the aperture (31) of the Bragg cell (3) via focusing optics which focus the laser beam in such manner that the focus occurs in the form of a focal line outside the Bragg cell (3).

5. An analyser as claimed in one of the claims 1 to 3, characterised in that the expanded laser beam which emerges from the prism expansion system (2) is supplied to the Bragg cell (3), unfocused, to illuminate the aperture (31) of the Bragg cell (3).

**Revendications**

1. Analyseur spectal à cellule de Bragg, comportant un système dispersif pour la dispersion du faisceau laser amené à la cellule de Bragg, faisceau qui sort d'une ouverture d'un diamètre de l'ordre de grandeur d'un millimètre sous forme d'un faisceau de rayons parallèles à répartition gaussienne de l'intensité lumineuse en coupe transversale et qui est amené sous cette forme au système dispersif, de la lumière diffusée étant superposée au faisceau de rayons parallèles, caractérisé en ce que le système dispersif est un système dispersif à prisme (2), qu'un diaphragme d'ouverture (21) est disposé dans le faisceau laser (6) devant le système dispersif à prisme (2), le diaphragme étant placé à une distance de l'ordre de grandeur d'un mètre devant l'ouverture (11) par laquelle sort le faisceau laser (6) et possédant un diamètre (d) de l'ordre de grandeur d'un millimètre, diamètre qui est plus grand que la largeur de valeur moyenne de la répartition gaussienne (60) en coupe transversale et qui coupe cette répartition (60) sur les bords, et que le système dispersif à prisme (2) disperse le faisceau laser à diffraction limitée sortant du diaphragme d'ouverture (21), présentant la diffraction gaussienne (61) coupée aux bords, en coupe transversale, dans une telle mesure que la répartition gaussienne dispersée et tronquée (62), en coupe transversale, présente, sur les bords de l'ouverture (31) de la cellule de Bragg (3), une valeur d'intensité (I) pouvant être préfixée et qui est plus petite que la moitié de la valeur d'intensité maximale ($I'_0$) au centre de cette répartition (62) en coupe transversale.

2. Analyseur selon la revendication 1, caractérisé en ce que la valeur d'intensité (I) de la répartition gaussienne dispersée et tronquée (62), en coupe transversale, est à peu près égale sur les bords de l'ouverture (31) de la cellule de Bragg (3) à la $3 \times 10^{-4}$-ième partie de la valeur d'intensité maximale ($I'_0$) au centre de cette répartition (62) en coupe transversale.

3. Analyseur selon la revendication 1 ou 2, caractérisé en ce que le diamètre (d) du diaphragme d'ouverture (21) est choisi de manière que le système dispersif à prisme (2) le porte au diamètre (D) de l'ouverture (31) de la cellule de Bragg (3).

4. Analyseur selon une des revendications précédentes, caractérisé en ce que le faisceau laser dispersé, issu du système dispersif à prisme (2), est amené à la cellule de Bragg (3) à travers une optique de focalisation pour l'éclairement de l'ouverture (31) de la cellule de Bragg (3), optique qui focalise le faisceau laser de manière que le foyer soit situé sous forme d'une ligne focale à l'extérieur de la cellule de Bragg (3).

5. Analyseur selon une des revendications 1 à 3, caractérisé en ce que le faisceau laser dispersé, issu du système dispersif à prisme (2), est amené à la cellule de Bragg (3) sans être focalisé en vue de l'éclairement de l'ouverture (31) de la cellule de Bragg (3).

$I = I_0' \cdot 3 \cdot 10^{-4}$